# EUROPÄISCHE PATENTSCHRIFT

(11) **EP 3 532 760 B1**
(45) Veröffentlichungstag und Bekanntmachung des Hinweises auf die Patenterteilung: **07.06.2023**
(21) Anmeldenummer: 17797107.4
(22) Anmeldetag: 26.10.2017
(51) Int. Cl.: F16L 27/10, F16L 55/10, B63B 27/24, F16L 27/02, F16L 27/12, B63B 27/34, F16L 29/00, F16L 29/04

(54) **KUPPLUNGSVORRICHTUNG ZUM ZUSAMMENSCHLIESSEN ZWEIER LEITUNGEN**
COUPLING DEVICE TO CONNECT TWO LINES
DISPOSITIF D'ACCOUPLEMENT POUR RACCORDER DEUX LIGNES

(30) Priorität: 26.10.2016 DE 102016120446
(43) Veröffentlichungstag der Anmeldung: 04.09.2019
(73) Patentinhaber: Von Keitz, Andreas, 65582 Diez (DE)
(72) Erfinder: Von Keitz, Andreas, 65582 Diez (DE)
(74) Vertreter: Blumbach · Zinngrebe Patentanwälte PartG mbB
(86) Internationale Anmeldenummer: PCT/EP2017/077490
(87) Internationale Veröffentlichungsnummer: WO 2018/078036

(56) Entgegenhaltungen:
- WO-A1-2008/059668
- WO-A1-2014/111278
- WO-A1-2014/111279
- WO-A1-2016/129605
- DE-A1- 2 344 327
- US-A- 3 031 213
- US-A- 3 458 219
- US-A- 3 495 853
- US-A- 4 317 586
- US-A- 4 361 165

## Beschreibung

Die Erfindung betrifft eine Kupplungsvorrichtung zur Kopplung von Leitungen, insbesondere solche zum Einsatz im Außenbereich.

Das Dokument US 3,458,219 sieht eine Verbindung zwischen Rohren vor, die die Möglichkeit bietet, dass eines der Rohre eine relativ kleine Winkelverschiebung in Bezug auf das andere der Rohre aufweisen kann. Die Rohre werden durch eine Struktur aufeinander gedrückt, die eine Vielzahl von Federmitteln umfasst, die in Umfangsrichtung um die Rohre herum verteilt sind. Dokument US 3,031,213 offenbart eine flexible Kupplung, die eine winklige und versetzte Ausrichtung der gekoppelten Rohrabschnitte ermöglicht. Dokument US 4,361,165 offenbart eine sofort abtrennbare Rohrkupplung, die in verschiedenen marinen Terminalanwendungen eingesetzt werden kann.

Derartige Kupplungen müssen im Vergleich etwa zu Steckverbindern im Innenbereich besondere Anforderungen an die mechanische Belastbarkeit erfüllen. Besondere Anforderungen ergeben sich bei Kupplungen, die für den Einsatz im Wasser, beispielsweise für den Offshore-Bereich vorgesehen sind. Entweder müssen derartige Kupplungen unter Wasser einem hohen hydrostatischen Druck standhalten, oder aber die Kupplungen sind dem Seegang ausgesetzt. Speziell der Seegang bringt immer wiederkehrende mechanische Belastungsspitzen mit sich. Diese können dann im Laufe der Zeit zu Ermüdungserscheinungen führen, so dass sich die Kupplung ungewollt auftrennt.

Der Erfindung liegt daher die Aufgabe zugrunde, eine Kupplungsvorrichtung bereitzustellen, welche besonders für den Einsatz unter wechselnden, seitlich einwirkenden mechanischen Belastungen, wie sie unter anderem durch Seegang hervorgerufen werden, geeignet ist.

Diese Aufgabe wird durch den Gegenstand des unabhängigen Anspruchs 1 gelöst. Vorteilhafte Weiterbildungen sind in den abhängigen Ansprüchen angegeben.

Die Kupplungsvorrichtung stellt eine auftrennbare Verbindung her. Dabei können die beiden Leitungen durch Lösen der Verbindung der beiden Kupplungsteile voneinander getrennt werden, wobei an jedem Ende der Leitungen eines der Kupplungsteile verbleibt. Es ist eine Kupplungsvorrichtung zum Zusammenschließen zweier Leitungen vorgesehen, welche zwei Kupplungsteile aufweist, die zur Herstellung einer Verbindung zweier Leitungen lösbar miteinander in axialer Richtung zusammengekoppelt und verbunden werden können, wobei die Verbindung der Kupplungsteile mit zumindest einer Dichtung gegenüber der Umgebung abgedichtet ist, und wobei die beiden Kupplungsteile mit mehreren in Umfangsrichtung der Kupplungsvorrichtung verteilten, federbelasteten Kupplungselementen zusammengehalten werden, derart, dass die beiden Kupplungsteile entgegen von durch die Federbelastung wirkenden Federkräften auseinander bewegt oder geknickt werden können, bis die Kupplungselemente nach Überschreiten eines bestimmten Wegs entkoppeln, so dass sich die Kupplungsteile trennen können, wobei die beiden Kupplungsteile bis zur Trennung um einen Knickwinkel von mindestens 0,5 °, in Weiterbildung der Erfindung sogar um mindestens 1° abknickbar sind. Die Kupplungsteile können zur Herstellung einer Verbindung der zwei Leitungen reversibel lösbar miteinander in axialer Richtung zusammengekoppelt und verbunden werden, sodass die Leitungen wiederholt miteinander verbunden werden können. Zumindest eines der Kupplungsteile umfasst einen Auftriebskörper, sodass zumindest eines der Kupplungsteile im Wasser schwimmfähig ist. besonders bevorzugt ist die Kupplungsvorrichtung in zusammengekuppeltem Zustand der beiden Kupplungsteile in Wasser schwimmfähig.

Dadurch, dass die Kupplung schwimmfähig ist, sind die zusammengekoppelten Leitungen oder eine ins Wasser gefallene Leitungshälfte mit Kupplungsteil an der Wasseroberfläche leicht zugänglich. Andererseits besteht dann das Problem, dass der Seegang auf die Leitungen und damit auch auf die Kupplung dann ständig wechselnde Kräfte ausübt. Um die dadurch verursachten Belastungen abzufangen, ist der Kopplungsmechanismus durch die federbelasteten Kupplungselemente flexibel und ermöglicht bis zu einem gewissen Maß einer der mechanischen Belastung ausweichende Knickbewegung, ohne dass die Kupplungsteile sich trennen.

Die Erfindung wird nachfolgend genauer anhand einiger der beigeschlossenen Figuren beschrieben. Es zeigen:
Fig. 1 eine nicht unter den Wortlaut der Ansprüche fallende Kupplungsvorrichtung in Normalposition,
Fig. 2 eine nicht unter den Wortlaut der Ansprüche fallende Kupplungsvorrichtung unter Einwirkung einer Querkraft,
Fig. 3 schematisch eine erfindungsgemäße Kupplungsvorrichtung mit zwei zusammengekoppelten Kupplungsteilen,
Fig. 4 die in Fig. 3 gezeigte, unter axialer Zugbelastung belastete Kupplungsvorrichtung.
Fig. 5 die in Fig. 3 gezeigte, mit einem Biegemoment belastete Kupplungsvorrichtung,
Fig. 6 die nach übermäßiger Dehnung oder Knickbewegung voneinander getrennten Kupplungsteile,
Fig. 7 eine Ausführungsform mit zueinander korrespondierenden Schrägflächen an Kupplungselement und Kupplungsteil,
Fig. 8 die in Fig. 7 gezeigte, mit einem Biegemoment belastete Kupplungsvorrichtung,
Fig. 9 eine weitere Ausführungsform einer Kupplungsvorrichtung mit mehreren in Umfangsrichtung der Kupplungsvorrichtung verteilten, federbelasteten Kupplungselementen,
Fig. 10 ein Kupplungsteil der in Fig. 9 gezeigten Kupplung mit geöffneten Kupplungselementen,
Fig. 11 die in Fig. 9 gezeigte, mit einem Biegemoment belastete Kupplungsvorrichtung,
Fig. 12 als Anwendungsbeispiel eine Kupplungsvorrichtung zur Verbindung eines Wasserfahrzeugs mit einer Installation an Land,
Fig. 13 die Anordnung nach Fig. 10 mit aufgetrennter Kupplungsvorrichtung,
Fig. 14 eine schwimmende Leitungsverbindung und
Fig. 15 eine Leitungsanordnung mit einer Kupplungsvorrichtung unter seitlicher Krafteinwirkung.

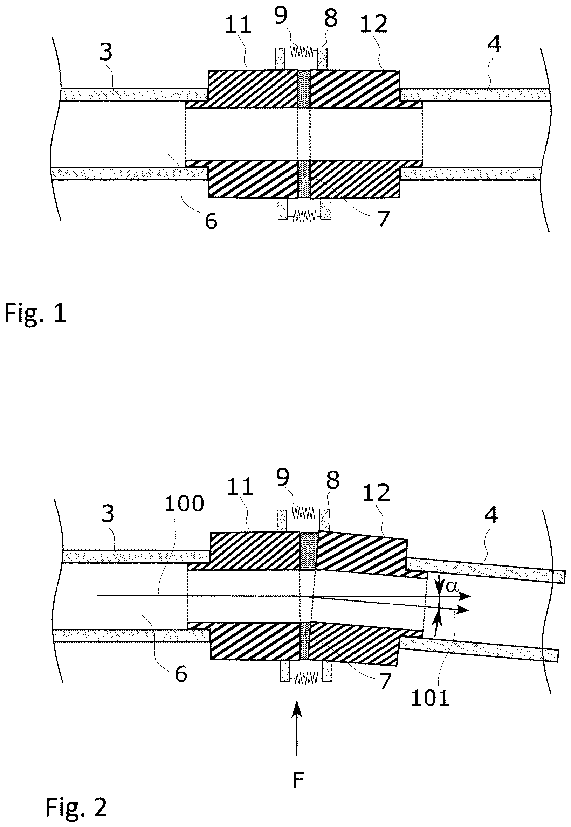

Fig. 1 zeigt eine Kupplungsvorrichtung 1 in einer grundlegenden Ausführungsform. Die Kupplungsvorrichtung 1 umfasst zwei Kupplungshälften, beziehungsweise Kupplungsteile 11, 12. Mit der Kupplungsvorrichtung 1 werden zwei Leitungen 3, 4 zusammengeschlossen, so dass ein Fluid durch die Leitungen, beziehungsweise von einer in die andere Leitung fließen kann. Die Leitungen sind insbesondere in axialer Richtung 100 aneinandergekoppelt. Die axiale Richtung 100 verläuft dabei in Längsrichtung der Leitungen, beziehungsweise dementsprechend auch in Richtung eines Fluidflusses durch die Leitungen. Die Kupplungsvorrichtung 1 weist mehrere in Umfangsrichtung verteilte, beziehungsweise um den durch die zusammengekoppelten Leitungen 3, 4 hergestellten Fluidkanal 6 herum verteilte Kupplungselemente 8 auf. Die Kupplungselemente 8 sind federbelastet, so dass diese in axialer Richtung der Kupplungsvorrichtung 1 expandierbar sind. Dazu sind die Kupplungselemente 8 mit Federelementen 9 ausgestattet. Mit den Kupplungselementen 8 sind die beiden Kupplungsteile 11, 12 aneinander fixiert. Die Kupplungsvorrichtung 1 ist nun so ausgebildet, dass die beiden Kupplungsteile 11, 12 durch in Bezug auf die axiale Richtung der Kupplungsvorrichtung 1 seitlich einwirkende Kräften gegenüber einer Normalposition zueinander abgewinkelt werden können. Fig. 1 zeigt dabei die Kupplungsvorrichtung 1 in der genannten Normalposition. In Fig. 2 sind eine solche seitlich, beziehungsweise quer zur axialen Richtung 100 einwirkende Kraft F und die Kupplungsvorrichtung 1 in abgewinkelter Stellung dargestellt. Durch die Kraft F hat sich zwischen den axialen Richtungen 100, 101 der Kupplungsteile 11, 12 gegenüber der Normalposition ein Winkel α eingestellt. Um auch in abgewinkeltem Zustand die Abdichtung des Fluidkanals 6 zu gewährleisten, kann ein deformierbares Verbindungselement 7 zwischen den beiden Kupplungsteilen 11, 12 vorgesehen sein.

Die Federelemente 9 der Kupplungselemente 8 nehmen die Querkraft auf und sorgen damit für eine flexible Verbindung der beiden Leitungen 3, 4. Damit werden abrupt auftretende und starke seitliche Kräfte und Biegemomente aufgefangen, so dass die Kupplungsvorrichtung bei Bewegungen der Leitungsverbindung, wie sie im Außenbereich beispielsweise bei Seegang in Offshore-Anwendungen weniger mechanisch belastet wird. Die Federbelastung in der in Fig. 2 gezeigten Position sorgt auch für ein Rückstellmoment, mit welchem die Kupplungsteile 11, 12 bei abgeklungener Querkraft wieder in die Normalposition zurückgestellt werden.

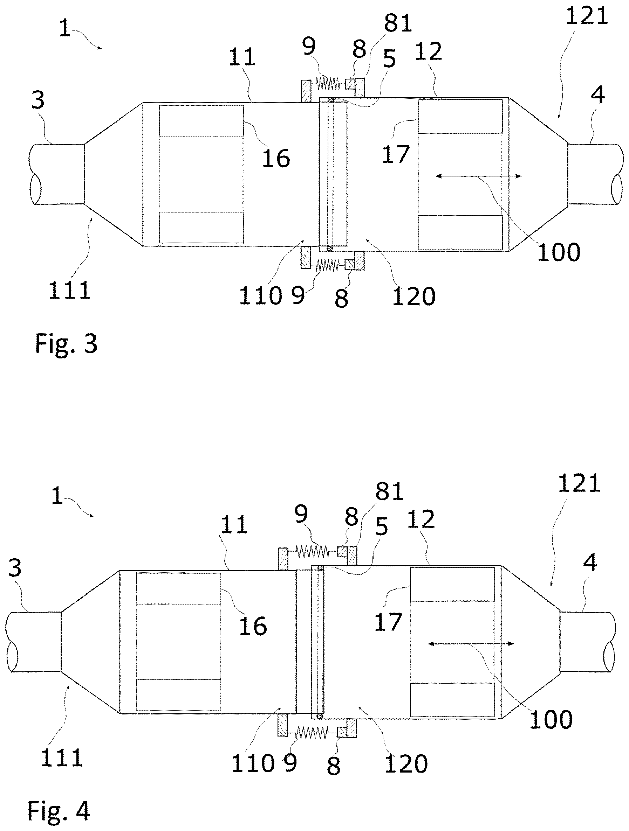

Fig. 3 zeigt den prinzipiellen Aufbau einer erfindungsgemäßen Kupplungsvorrichtung 1 gemäß einer Weiterbildung der Erfindung. Die hier gezeigte Kupplungsvorrichtung ist zur lösbaren Verbindung zweier Leitungen vorgesehen. Die Kupplungsvorrichtung 1 umfasst zwei Kupplungshälften, beziehungsweise Kupplungsteile 11, 12 mit welchen eine Verbindung zweier Leitungen 3, 4 hergestellt wird. Diese Verbindung soll reversibel lösbar sein, so dass die Leitungen 3, 4 wiederholt miteinander verbunden werden können. Je nach Anwendungsfall kann die erfindungsgemäße Kupplungsvorrichtung allgemein zum Verbinden zweier Fluid- Strom- oder Signalleitungen 3, 4 ausgebildet sein. Ebenso können auch als Leitungsstränge ausgebildete Leitungen 3, 4, beispielsweise mit mehreren parallelen Fluidleitungen, oder Stränge mit mindestens einer Fluidleitung und einem Stromkabel aneinander angeschlossen werden.

Die Verbindung erfolgt in axialer Richtung 100 der Kupplungsteile 11, 12. Jedes der Kupplungsteile 11, 12 weist ein Kopplungsende 110, beziehungsweise 120 auf, mit welchem die Kupplungsteile 11, 12 miteinander verbunden werden, sowie ein gegenüberliegendes Anschlußende 111, 121 zum Anschluß der jeweiligen Leitung 3, 4. Die axiale Richtung wird auch durch die Längsrichtungen der Leitungen 3, 4 definiert. Eine Zugspannung auf den Leitungen 3, 4 führt damit zu einer in Längsrichtung 100 der Kupplungsvorrichtung 1 wirkenden Zugkraft.

Die Kupplungsvorrichtung 1 ist in zusammengekuppeltem Zustand der beiden Kupplungsteile 11, 12 in Wasser schwimmfähig. Bevorzugt, ohne Beschränkung auf das spezielle dargestellte Beispiel ist jedes der Kupplungsteile 11, 12 für sich genommen schwimmfähig. Um die Schwimmfähigkeit zumindest einer der Kupplungsteile 11, 12 herzustellen, kann das Kupplungsteil zumindest einen Auftriebskörper aufweisen. Vorzugsweise sind, wie auch im Beispiel der Fig. 3 dargestellt, beide Kupplungsteile 11, 12 mit mindestens einem Auftriebskörper 16, 17 ausgestattet. Ein bevorzugtes Konstruktionsmaterial für die Kupplungsvorrichtung 1 ist Metall. Gerade in diesem Fall bieten sich Auftriebskörper an, um die Schwimmfähigkeit der Kupplungsvorrichtung 1 und/oder der Kupplungsteile 11, 12 zu ermöglichen. Der oder die Auftriebskörper 16, 17 können auch außen am jeweiligen Kupplungsteil 11, 12 montierbar sein, um die Schwimmfähigkeit eines der oder beider Kupplungsteile 11, 12 zu unterstützen.

Um das Kupplungsinnere abzudichten, ist die Verbindung der Kupplungsteile 11, 12 mit zumindest einer Dichtung 5 gegenüber der Umgebung abgedichtet.

Es sind mehrere Kupplungselemente 8 vorgesehen, welche im zusammengekuppelten Zustand der beiden Kupplungsteile 11, 12 mit einer oder mehreren Federelementen 9 federbelastet sind und auf diese Weise die Kupplungsteile in axialer Richtung 100 gegeneinanderdrücken und somit zusammenhalten. Zweckmäßig sind die Kupplungselemente 8 auf dem Umfang der Kupplungsvorrichtung 1 verteilt. Damit wird auch die von dem oder den Federelementen 9 ausgeübte Kraft auf dem Umfang der Kupplungsvorrichtung 1 aufgeteilt. Die Kupplungselemente 8 sind in dem dargestellten Beispiel an einem der Kupplungsteile (hier Kupplungsteil 11) über die Federelemente 9 befestigt und greifen an Widerlagern 81 am anderen Kupplungsteil 12 an. Der Kopplungsmechanismus ist in Fig. 3 dabei rein symbolisch. Auf eine mögliche und bevorzugte Verbindung der Kupplungselemente 8 wird weiter unten eingegangen. Es gibt aber auch noch weitere Möglichkeiten. Beispielsweise könnten Widerlager 81 und Kupplungselement 8 über magnetische Kräfte miteinander verbunden sein.

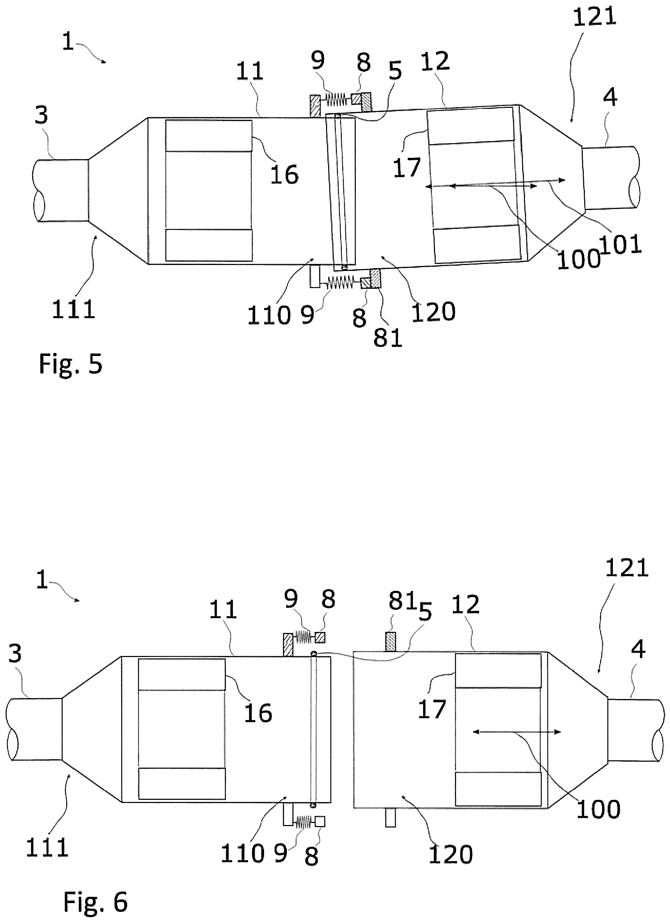

Die Verbindung mit den Kupplungselementen 8 ist hingegen nicht starr, so dass durch Wellengang oder andere Bewegungen, etwa beim Anstoßen der schwimmenden Kupplungsvorrichtung 1, beispielsweise an eine Mole oder einen Schiffsrumpf die auf die Kupplungselemente wirkenden Kräfte teilweise abgefedert werden können. Allgemein, ohne Beschränkung auf das dargestellte Beispiel können erfindungsgemäß die beiden Kupplungsteile 11, 12 entgegen von durch die Federbelastung wirkenden Federkräften auseinander bewegt oder geknickt werden. Im Falle einer lösbaren Kupplung, wie im Falle der Fig. 5 können die Kupplungselemente 8 nach Überschreiten eines bestimmten Wegs entkoppeln, so dass sich die Kupplungsteile 11, 12 trennen können. Vorzugsweise sind die beiden Kupplungsteile 11, 12 bis zur Trennung um einen Knickwinkel von mindestens 0,5 ° abknickbar, ohne dass die Kupplungselemente 8 die Verbindung der Kupplungsteile 11, 12 freigeben.

Fig. 4 zeigt dazu einen ersten Belastungszustand der Kupplungsvorrichtung 1, bei welchem eine Zugkraft in axialer Richtung wirkt. Die beiden Kupplungsteile 11, 12 sind durch die anliegende Kraft etwas voneinander weg bewegt und die Federelemente 8 verglichen mit dem in Fig. 3 gezeigten Zustand weiter gespannt. Dementsprechend wirkt die Zugkraft gegen die von den Federelementen 9 ausgeübte Kraft, welche die beiden Kupplungsteile 11, 12 aufeinanderzieht.

Fig. 5 zeigt einen weiteren, für den Zweck der Erfindung besonders relevanten Fall. Bei dem in Fig. 5 gezeigten Zustand sind die beiden Kupplungsteile 11, 12 durch ein seitlich, beziehungsweise quer zur Längsrichtung einwirkenden Kraft relativ zueinander abgeknickt. Die Längsrichtung 101 des Kupplungsteils 12 weist demnach gegenüber der Längsrichtung 100 der übrigen Kupplungsvorrichtung 1, im Speziellen auch der Längsrichtung des anderen Kupplungsteils 11 einen Winkel auf.

In beiden Fällen, also dem in Fig. 4 gezeigten Fall einer Dehnung und dem in Fig. 5 gezeigten Fall eines Knicks koppeln die Kupplungselemente 8 die beiden Kupplungsteile nach wie vor aneinander. Auch hält die Dichtung 5 die Abdichtung des Inneren der Kupplungsteile gegenüber der Umgebung trotz Knick oder Dehnung aufrecht.

Nach Überschreiten eines bestimmten Wegs entkoppeln die Kupplungselemente 8, lösen sich also von den Widerlagern 81, so dass sich die Kupplungsteile (11, 12) trennen. Dieser Zustand ist in Fig. 6 dargestellt. Im zusammengekuppelten Zustand stehen die Federelemente 9 auch ohne von außen angreifende Kräfte vorzugsweise unter Spannung, so dass die Kupplungsteile gegeneinander gepresst werden. Demnach sind dann auch im getrennten Zustand gemäß Fig. 6 die Federelemente 9 gegenüber dem in Fig. 3 gezeigten, zusammengekoppelten Zustand kontrahiert. Auch der umgekehrte Fall ist möglich, bei welchem die Federkraft für das Aneinanderpressen der Kupplungsteile nicht durch eine Dehnung, sondern durch eine Kompression eines oder mehrerer Federelemente 9 erreicht wird.

Bis zum in Fig. 6 gezeigten Entkoppeln der Kupplungsteile 11, 12 können diese um einen Winkel von mindestens 0,5 ° durch ein äußeres Biegemoment gegeneinander verkantet werden. Bei dem in Fig. 5 gezeigten Beispiel beträgt der Winkel etwa 3°.

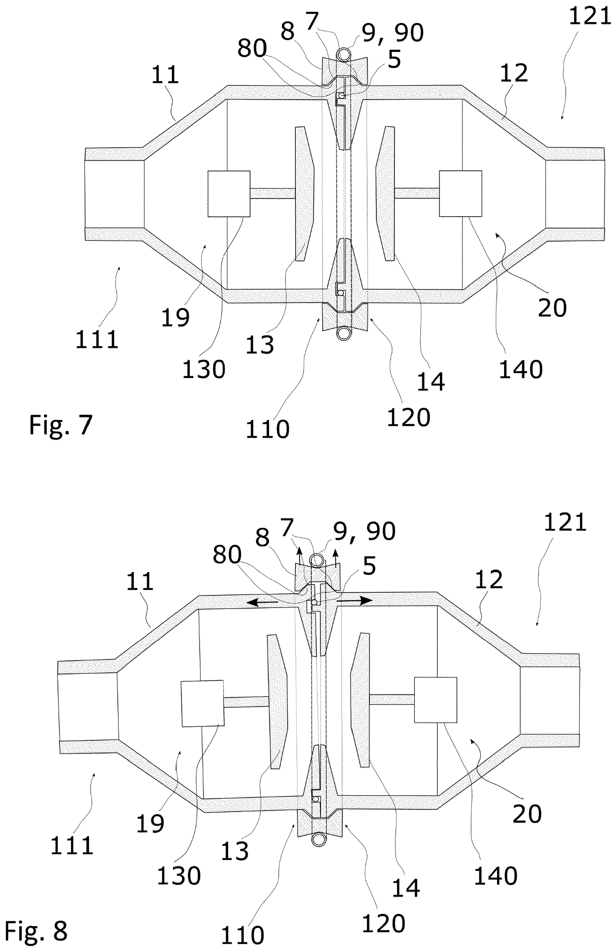

Fig. 7 zeigt eine Ausführungsform mit einer konkreten Ausgestaltung der Kopplungselemente 8. Diese Ausführungsform der Kupplungsvorrichtung 1 basiert darauf, dass zumindest eines der Kupplungsteile 11, 12 wenigstens eine schräg bezüglich der axialen Richtung 100 der Kupplungsvorrichtung 1 verlaufende Kopplungsfläche 7, sowie in Umfangsrichtung verteilte federbelastete Kupplungselemente 8 aufweist, welche in zusammengekuppeltem Zustand der Kupplungsteile in Kontakt mit einer oder mehreren dieser schrägen Kopplungsflächen 7 stehen. Die Kupplungselemente 8 sind in radialer Richtung entgegen der Federbelastung bewegbar. Durch die schräg liegende Kopplungsfläche 7 werden radial wirkende Kräfte der Federbelastung in axial wirkende Kräfte umgesetzt, welche die beiden Kupplungsteile 11, 12 an deren Kupplungsenden 110, 120 zusammenhalten. Die Kupplungsteile 11, 12 sind dabei durch eine quer zur axialen Richtung einwirkende Kraft gegen die radial wirkende Federbelastung abknickbar, indem das Kupplungselement 8 in radialer Richtung gegen die Federbelastung bewegt wird.

Insbesondere können, wie auch bei dem in Fig. 7 dargestellten Beispiel beide Kupplungsteile 11, 12 mit schrägen Kopplungsflächen 7 ausgestattet sein.

Das Federelement 9 umfasst gemäß einer aufgrund seiner konstruktiv einfachen Ausgestaltung vorteilhaftem Ausführungsform ein ringförmiges, aufspreizbares Federelement, beziehungsweise einen aufspreizbaren oder dehnbaren Federring 90. Die in radialer Richtung wirkenden Federkräfte entstehen dabei dadurch, dass dem Federelement durch das Aufspreizen eine in Umfangsrichtung wirkende Kontraktionskraft aufgeprägt ist. Ein solcher Federring kann auch in Verbindung mit Kupplungselementen 8 verwendet werden, die anders ausgestaltet sind, als bei der in Fig. 7 dargestellten Ausführungsform. Beispielsweise könnten auch drehbar gelagerte, hebelförmige Kupplungselemente 8 vorgesehen werden, die durch einen Federring 90 zusammengespannt werden.

Gemäß noch einer Weiterbildung können auch die Kupplungselemente 8 zu der Kopplungsfläche 7 korrespondierende und zur axialen Richtung 100 schräg liegende Flächen 80 aufweisen, so dass bei einer axialen Auseinanderbewegung der Kupplungsteile 11, 12 und dadurch vermittelter radialer Bewegung eines Kupplungselements 8 die korrespondierenden Flächen des Kupplungselements und der Kopplungsfläche 7 aneinander vorbei gleiten. Auch diese Weiterbildung ist bei dem in Fig. 7 gezeigten Beispiel realisiert. Insbesondere sind an den Kupplungselementen 8 auch zu den Schrägflächen 7 beider Kupplungsteile 11, 12 korrespondierende Schrägflächen 80 vorgesehen. Die Schrägflächen 80 der Kupplungselemente 8 sind dabei einander zugewandt, so dass die Kupplungsteile 11, 12 zusammengeklammert werden.

Die beiden Kupplungsteile 11, 12 weisen gemäß einer besonders bevorzugten Ausgestaltung jeweils einen zum Kupplungsende 110, 120 hin geöffneten Hohlraum 19, 20 und eine Abdichtvorrichtung 13, 14 auf. Die Abdichtvorrichtung 13, 14 ist jeweils so ausgebildet, dass diese beim Trennen der Kupplungsteile 11, 12 den Hohlraum 19, 20 gegenüber der Umgebung abdichtet. Bei der in Fig. 7 dargestellten Ausführungsform sind die Abdichtvorrichtungen 13, 14 als Tellerventile ausgebildet. Jedes der Kupplungsteile 11, 12 kann eine Antriebseinrichtung 130, 140 aufweisen, um die Abdichtvorrichtungen 13, 14 zu betätigen und damit also den jeweiligen Hohlraum 19, 20 abzudichten. Die Antriebseinrichtungen 130, 140 können beispielsweise hydraulische oder pneumatische Antriebe sein, um die Tellerventile zur Abdichtung des Hohlraums 19, 20 in die Ventilsitze zu bewegen. Ebenso möglich ist auch ein Mechanismus, bei welchem die Tellerventile gegen vorgespannte Federn als Bestandteil der Antriebseinrichtungen 130, 140 offengehalten werden. Der Antrieb und das Anpressen an die Ventilsitze wird dann beim Trennen der Kupplungsteile durch die Federn bewirkt.

Es kann auch ein fernbetätigbarer Entkopplungsmechanismus vorgesehen werden, mit welchem die Kupplungselemente 8 radial bewegbar sind, bis diese von den Kopplungsflächen 7 entkoppeln und die Kupplungsteile 11, 12 sich trennen. Mittels eines solchen Mechanismus können dann auch gleichzeitig die Antriebseinrichtungen 130, 140 bewegt werden, um die Kupplungsteile 11, 12 abzutrennen.

Gemäß einer alternativen oder zusätzlichen Ausgestaltung kann die Kupplungsvorrichtung 1 auch als Sicherheitstrennkupplung ausgebildet sein, welche sich bei einer Überschreitung einer vorgegebenen mechanischen Zugbelastungsgrenze trennt, um zu vermeiden, dass die angeschlossenen Leitungen 3, 4 reißen.

Fig. 8 zeigt die Kupplungsvorrichtung gemäß Fig. 7 unter einer Belastung quer zur Längsrichtung. Die beiden Kupplungsteile 11, 12 werden durch die Belastung auf einer Seite auseinanderbewegt, so dass die axialen Richtungen der Kupplungsteile 11, 12 nicht mehr fluchten, sondern in einem Winkel zueinander stehen. Die Auseinanderbewegung der Kupplungsteile 11, 12 ist durch die Pfeile angedeutet. Das Kupplungselement 8 an der Stelle, an der die Kupplungsteile 11, 12 durch das einwirkende Biegemoment auseinanderbewegt werden, wird durch die an den Flächen 80 vorbeigleitenden Schrägflächen 7 radial auswärts bewegt. Die Kupplungsteile 11, 12 sind aber nach wie vor verbunden und der durch die zueinander geöffneten Hohlräume 19, 20 gebildete gemeinsamen Innenraum ist mittels der Dichtung 5 noch abgedichtet. Der Knickwinkel zwischen den beiden Kupplungsteilen 11, 12 beträgt im dargestellten Beispiel etwa 1,5°.

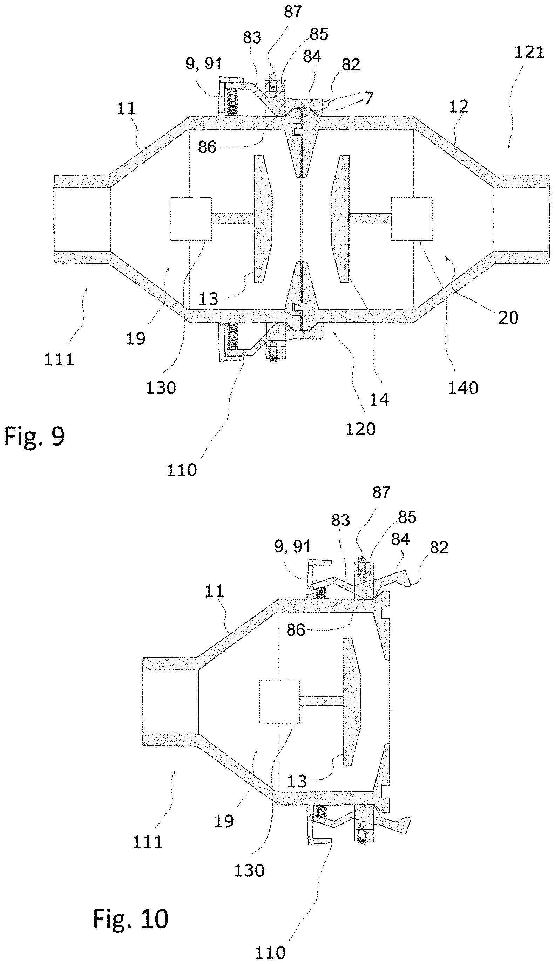

Fig. 9 zeigt ein Beispiel einer weiteren und besonders bevorzugten Ausführungsform einer Kupplungsvorrichtung 1. Diese Ausführungsform basiert allgemein darauf, dass die federbelasteten Kupplungselemente 8 Hebel 82 umfassen, wobei die Hebel 82 entgegen der Federbelastung schwenkbar gelagert sind. Insbesondere kann der Hebel 82 einen ersten, federbelasteten Arm 83 und einen zweiten, die Kopplung der beiden Kupplungsteile 11, 12 bewirkenden Arm 84 umfassen.

Ebenso wie bei der Ausführungsform der Fig. 7 und Fig. 8 und wie in Fig. 9 dargestellt, können die federbelasteten Kupplungselemente 8 in zusammengekuppeltem Zustand der Kupplungsteile in Kontakt mit einer oder mehreren Kopplungsflächen 7 stehen und entgegen der Federbelastung bewegbar sein. In diesem Fall ist die Bewegung entgegen der Federbelastung eine Schwenkbewegung. Im Speziellen wird eine Schwenkbewegung des Hebels 82 bewirkt, mit welchem sich der Arm 84 je nach Konstruktion radial ein- oder auswärts, vorzugsweise wie dargestellt radial auswärts bewegt. Die Lagerung des Hebels ist derart, dass die Schwenkbewegung um einen Schwenkpunkt 85 erfolgt. Besonders vorteilhaft ist es, die Position des Schwenkpunkts in radialer Richtung einstellbar auszubilden.

Gegenüberliegend zum Schwenkpunkt 85 weist der Hebel 82 eine Abstützfläche 86 auf, mit welcher sich der Hebel 81 am Kupplungsteil abstützen kann, wenn der Hebel entgegen der Federkraft geschwenkt wird, um die getrennten Kupplungsteile 11, 12 zusammensetzen und aneinanderkuppeln zu können. Für den Vorgang des Zusammenkuppelns bildet also die Abstützfläche den Schwenkpunkt des Hebels 82. Die Federkraft wird bei diesem Beispiel durch Spiralfedern 91 bewirkt. Denkbar sind aber auch andere Federtypen, beispielsweise ein Federring ähnlich den Ausführungsbeispielen der Fig. 7, 6, der sich um die Hebelarme 83 herum erstreckt, oder auch Gasdruckfedern oder Elastomerfedern.

Auch sind wiederum schräg liegende Kopplungsflächen 7 vorgesehen, durch welche radial wirkende Kräfte der Federbelastung in axial wirkende Kräfte umgesetzt werden, welche die beiden Kupplungsteile 11, 12 an deren Kupplungsenden 110, 120 zusammenhalten, und wobei die Kupplungsteile durch eine quer zur axialen Richtung einwirkende Kraft gegen die radial wirkende Federbelastung abknickbar sind, indem das Kopplungselement 8 in radialer Richtung gegen die Federbelastung bewegt wird.

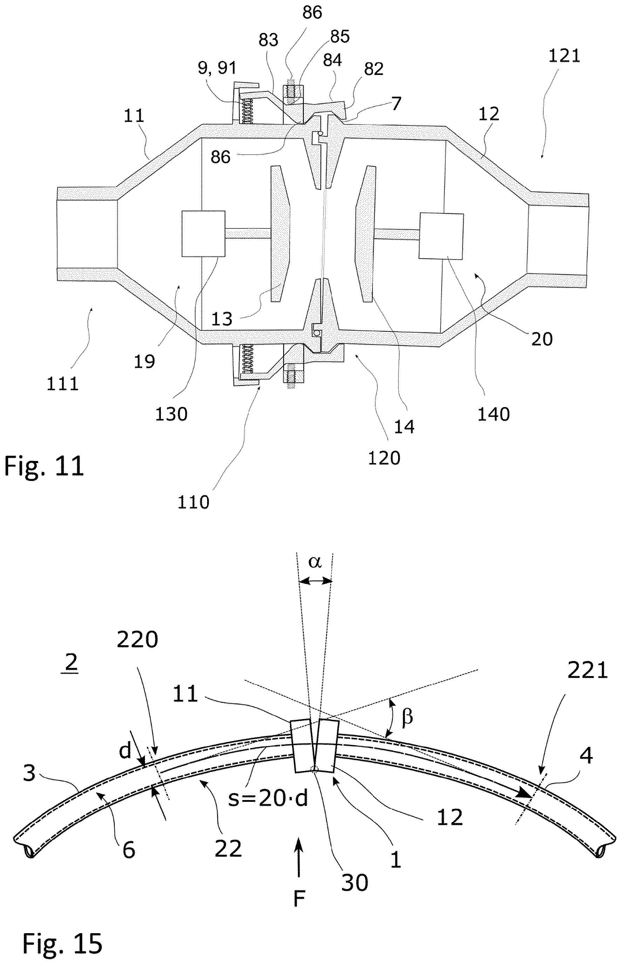

Die Fig. 10 und Fig. 11 verdeutlichen die Funktion der Kupplungselemente 8.

Fig. 10 zeigt das Kupplungsteil 11 mit geöffneten Kupplungselementen 8, also mit um die Abstützflächen 86 entgegen der Federkraft der Spiralfedern 91 geschwenkten Hebeln 82.

In Fig. 11 ist analog zu Fig. 8 die Kupplung 1 in einem durch quer zur Durchlassrichtung wirkende Kräfte leicht abgeknickten Zustand gezeigt, so dass die Achsen der Kupplungsteile in einem Winkel zueinander stehen. Dadurch, dass sich durch die Querkraft die Kupplungsteile 11, 12 und damit auch die Schrägflächen 7 auf einer Seite (in Fig. 11 oben) leicht auseinanderbewegen, wird der Hebelarm 84 des Hebels 82 gegen die auf den anderen Hebelarm 83 wirkende Federkraft um den Schwenkpunkt 85 geschwenkt. Ist der Knickwinkel und damit auch die Schwenkung des Hebels 82 noch größer als dargestellt, so entkoppeln die Kupplungselemente von den Schrägflächen 7 und die Kupplungsteile 11, 12 können sich voneinander lösen.

Wie anhand der Fig. 10 und Fig. 11 ersichtlich, unterscheiden sich die Längspositionen des Schwenkpunks 85 und des Auflagepunkts der Auflagefläche 86. Allgemein, ohne Beschränkung auf das spezielle Ausführungsbeispiel ist dazu gemäß einer Weiterbildung vorgesehen, dass das Kupplungselement 8, einen Hebel 82 umfasst, wobei der Hebel 82 so gelagert ist, dass dieser zwei sich in Längsposition entlang der Hebelarme 83, 84 unterscheidende Schwenkachsen aufweist, so dass eine Schwenkung durch auseinander Bewegen oder zueinander Knicken der Kupplungsteile 11, 12 um eine erste Schwenkachse und ein Öffnen der Kupplungselemente 8 zum Zusammenkoppeln der Kupplungsteile 11, 12 durch Schwenken um eine zweite Schwenkachse erfolgt. Die erste Schwenkachse läuft demnach bei der in den Fig. 9 bis Fig. 11 gezeigten Beispiel durch den Schwenkpunkt, die zweite Schwenkachse durch den Auflagepunkt der Auflagefläche 86 auf dem Kupplungsteil 11.

Dies hat unter anderem den Vorteil, dass durch die Lage der Schwenkachsen die Länge der Hebelarme und damit auch die zu überwindenden Kräfte beim Zusammenkuppeln oder Trennen der Kupplungsteile 11, 12 beeinflusst werden kann. Insbesondere kann auch zwischen den beiden Schwenkachsen ein dritter Hebelarm gebildet werden, über den durch Änderung der radialen Position des Schwenkpunkts 85 der Hebel 82 geschwenkt werden kann, so dass das Kupplungselement wie in Fig. 10 gezeigt in eine Montageposition gebracht wird, welche das Zusammensetzen der Kupplungsteile 11, 12 gestattet. Der Schwenkpunkt 85 wird bei der dargestellten Ausführungsform durch das Ende einer Stellschraube 87 gebildet. Die Stellschraube 87 kann nun, wie am unteren Kupplungselement 8 in Fig. 10 gezeigt, weiter eingeschraubt werden, so dass der Schwenkpunkt 85 sich radial einwärts bewegt, dadurch der Hebel um den Auflagepunkt der Auflagefläche 86 herum schwenkt und dadurch den Hebelarm 84 radial auswärts bewegt.

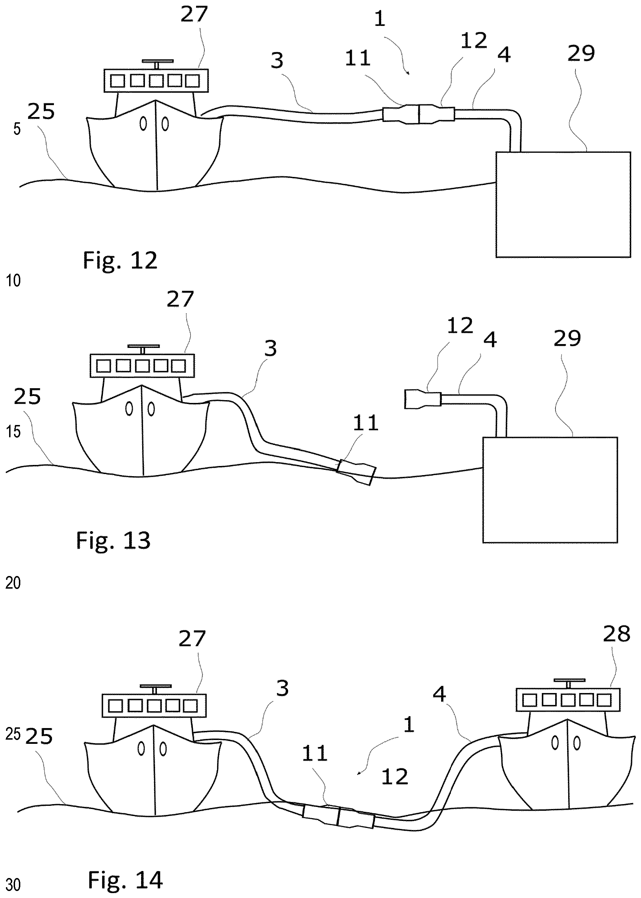

Fig. 12 zeigt einen Anwendungsfall einer erfindungsgemäßen Kupplungsvorrichtung 1. Zwei Leitungen 3, 4 sind über die Kupplungsvorrichtung 1 miteinander verbunden. Dabei ist die eine Leitung 3 an ein Wasserfahrzeug 27, die andere Leitung 4 an eine Installation an Land, etwa an einer Mole 29 angeschlossen. Die Leitungen 3, 4 können beispielsweise dazu dienen, eine Ladung des Wasserfahrzeugs zu löschen oder das Wasserfahrzeug 27 zu betanken.

Durch den Seegang kann es dabei zu Biegebelastungen kommen, die durch eine federnde Bewegung der Kupplungsteile 11, 12, wie anhand der Fig. 5 und Fig. 8 gezeigt, abgefangen wird. Kommt es nun, wie in Fig. 13 gezeigt, zu einer gewollten oder auch ungewollten Öffnung der Kupplungsteile 11, 12 so kann ein Kupplungsteil 11, welches dabei ins Wasser fällt, aufgrund dessen Schwimmfähigkeit leicht geborgen werden. Ein Problem kann insbesondere auch entstehen, wenn sich das Kupplungsteil bei fehlender Schwimmfähigkeit unter Wasser, etwa an Ankerketten verhakt.

Bei dem in den Fig. 12 und Fig. 13 gezeigten Beispiel ist die landseitige Leitung 4 starr, oder das landseitige Kupplungsteil 12 ist Bestandteil einer starren Installation, so dass das Kupplungsteil 12 auch nach einer Öffnung der Kupplungsvorrichtung 1 nicht ins Wasser fallen kann. In diesem Fall ist es nicht erforderlich, dass auch dieses Kupplungsteil 12 schwimmfähig ist.

Fig. 14 zeigt einen weiteren Anwendungsfall. Hier ist eine schwimmende Leitungsverbindung zwischen zwei Leitungen 3, 4 mit einer an der Wasseroberfläche schwimmenden Kupplungsvorrichtung 1 vorgesehen. Die Leitungen 3, 4 werden, da die Kupplungsvorrichtung 1 trotz ihres Gewichts selbst schwimmfähig ist, nicht unter Wasser gezogen und können so leicht wieder geborgen werden.

Hier wirkt der Seegang direkt über die Leitungen 3, 4 auch auf die dazwischen befindliche Kupplungsvorrichtung ein und bewirkt dort Biegemomente. Größere Biegemomente werden durch die hier beschriebene Knickbewegung der beiden Kupplungsteile aufgefangen. Bei Überschreitung eines Grenzwerts des Biegemoments kommt es zum Auslösen der Kupplungsvorrichtung durch Auftrennen. Eine solche Leitungsverbindung kann beispielsweise eingesetzt werden, um wie dargestellt zwischen zwei Wasserfahrzeugen 27, 28 flüssige oder gasförmige Fluide zu fördern.

Die Erfindung ist allgemein besonders geeignet, um voluminöse Leitungen großen Durchmessers miteinander zu verbinden. Entsprechend weist auch die Kupplungsvorrichtung 1 vorzugsweise einen großen Durchmesser auf. Gerade bei solchen Kupplungsvorrichtungen und Leitungen stellen die im Seegang auftretenden Kräfte ein Problem wegen möglicher Materialermüdungen dar. Bevorzugt weist die Kupplungsvorrichtung 1 ohne Beschränkung auf die Ausführungsbeispiele einen Durchmesser von mindestens 30 cm auf. Typische Durchmesser des Fluidkanals 6 in den Kupplungsteilen 11, 12 liegen gemäß einer Ausführungsform der Erfindung bei mindestens 8 Zoll (203,2 mm), vorzugsweise mindestens 10 Zoll (254 mm) oder auch bei 12 Zoll (304,8 mm) und mehr.

Die durch die Erfindung erreichte Flexibilität der Kupplungsvorrichtung 1 ist vorteilhaft selbst dann, wenn die Leitungen 3, 4, die mit der Kupplungsvorrichtung verbunden sind, nicht völlig starr sind. Besonders bei großen Leitungsdurchmessern, wie bei den vorgenannten Innendurchmessern von mindestens 8 Zoll (203,2 mm) sind die Querkräfte, die auftreten können, so erheblich, dass es zu Ermüdungserscheinungen an einer Kupplungsvorrichtung kommen kann, wenn diese starr ausgebildet ist und so die Querkräfte nicht abfangen kann. Es ist daher allgemein von besonderem Vorteil, wenn die Kupplungsvorrichtung eine Flexibilität bereitstellt, die größer ist, als die Flexibilität der Leitungsanordnung. Dies wird erreicht, wenn entlang eines Abschnitts der Leitungsanordnung, welcher die erfindungsgemäße Kupplungsvorrichtung 1 umfasst, bei Einwirkung einer Querkraft die Enden des Abschnitts um einen Winkel gegenüber einer geradlinigen Anordnung ausgelenkt werden, wobei die Kupplungsvorrichtung 1 so ausgelegt ist, dass der Winkel, um welchen die beiden Kupplungsteile 11, 12 gegenüber deren axialen Richtung ausgelenkt werden, mehr als die Hälfte des Winkels der Auslenkung der Enden des Abschnitts der Leitungsanordnung ausmachen. Mit anderen Worten ist die Kupplungsanordnung 1 so ausgelegt, dass bei einer einwirkenden Querkraft die Verformung der Leitungsanordnung überwiegend durch das Abknicken der Kupplungsteile 11, 12 erfolgt. Dieses Verhältnis hängt insbesondere auch von der Länge eines Leitungsabschnitts in Bezug auf dessen Innendurchmesser ab. In bevorzugter Ausführungsform kann ein Leitungsabschnitt betrachtet werden, welcher die zwanzigfache Länge des Innendurchmessers des Fluidkanals 6 aufweist und der wie gesagt die Kupplungsvorrichtung 1 einschließt. Zur Verdeutlichung ist in Fig. 15 eine Leitungsanordnung 2 unter Einwirkung einer seitlichen Kraft F und dadurch erzeugter Verformung eines Leitungsabschnitts 22 dargestellt. Der Leitungsabschnitt 22 ist lediglich ein gedachter Teil der Leitungsanordnung 2 und weist eine Länge s auf, die wesentlich größer ist, als der Leitungsquerschnitt, beziehungsweise der Durchmesser d des Fluidkanals 6 in einer der Leitungen 3, 4. Gemäß einer Ausführungsform wird ein Leitungsabschnitt 22 betrachtet, der die zwanzigfache Länge des Durchmessers d des Fluidkanals 6 aufweist, s=20*d. Gemäß einer anderen Ausführungsform kann auch ein Leitungsabschnitt 22 mit festgelegter Länge betrachtet werden. Eine geeignete Länge beträgt 8 Meter.

Durch eine seitlich im Bereich des Leitungsabschnitts 22 einwirkende Kraft F verbiegt sich die Leitungsanordnung 2. Demgemäß weisen die Tangenten an die axialen Richtungen der Abschnittsenden 220, 221 des Leitungsabschnitts 22 wie dargestellt einen Winkel β zueinander auf. Die Rückstellkräfte der Federelemente 9 der Kupplungselemente 8 sind so bemessen, dass der durch die seitliche Kraft F hervorgerufene Knickwinkel α mehr als die Hälfte des Winkels β des Leitungsabschnitts 22, beziehungsweise den Richtungen der Abschnittsenden 220, 221 ausmacht. Demgemäß wird die Flexibilität des Leitungsabschnitts 22 zur Entlastung der Leitungsanordnung gegenüber auftretenden mechanischen Momenten überwiegend durch die Kupplungsvorrichtung 1 bewirkt.

Zusammengefasst wird also eine Leitungsanordnung 2 bereitgestellt, welche zwei Leitungen 3, 4, vorzugsweise Schlauchleitungen umfasst, welche durch eine erfindungsgemäße Kupplungsvorrichtung 1 miteinander verbunden sind, wobei die Federelemente 9 der Kupplungselemente 8 der Kupplungsvorrichtung 1 so ausgelegt sind, dass bei einer durch eine seitlich auf einen Leitungsabschnitt 22 einwirkenden Kraft, innerhalb welchem die Kupplungsvorrichtung 1 angeordnet ist, der durch die Kraft F hervorgerufene Knickwinkel α zwischen den Kupplungsteilen 11, 12 mehr als die Hälfte des Winkels β zwischen den Längsrichtungen, beziehungsweise der axialen Richtungen der Abschnittsenden 220, 221 ausmacht. Dabei ist die Länge des Leitungsabschnitts 22 gemäß einer ersten Ausführungsform durch das zwanzigfache des Innendurchmessers des Fluidkanals 6 einer der Leitungen 3, 4 gegeben. Gemäß einer anderen Ausführungsform beträgt die Länge 8 Meter.

Anhand von Fig. 15 ist weiterhin zu erkennen, dass die Kupplungsvorrichtung 1 weiterhin so ausgebildet ist, dass der Drehpunkt 30, um welchen sich die Kupplungsteile 11, 12 beim Abknicken bewegen, allgemein und bevorzugt ausserhalb des Fluidkanals 6 liegt. Dies ist auch bei den anderen in den Figuren dargestellten Ausführungsformen offensichtlich der Fall. Eine solche Anordnung ist unter anderem günstig, da diese eine einfachen Aufbau mit sich bringt und zum anderen gegenüber ein Abknicken um einen zentrisch angeordneten Drehpunkt eine größere Auslenkung an den gegenüberliegend der einwirkenden Kraft liegenden Federelementen 9 und damit eine größere Rückstellkraft bewirkt.

Es ist dem Fachmann ersichtlich, dass die Erfindung nicht auf die erfindungsgemäßen

Ausführungsformen der Figuren beschränkt ist. Die Federelemente 9 sind beispielsweise als Spiralfedern gezeigt, es können aber auch Blattfedern, Tellerfedern, elastomere oder pneumatische Federelemente eingesetzt werden.

### Bezugszeichenliste:

- 1: Kupplungsvorrichtung
- 2: Leitungsanordnung
- 3, 4: Leitung
- 5: Dichtung
- 6: Fluidkanal
- 7: deformierbares Verbindungselement
- 8: Kupplungselement
- 9: Federelement
- 11, 12: Kupplungsteil
- 13, 14: Abdichtvorrichtung
- 16, 17: Auftriebskörper
- 19,20: Hohlraum
- 25: Wasseroberfläche
- 27, 28: Wasserfahrzeug
- 29: Mole
- 30: Drehpunkt
- 81: Widerlager
- 82: Hebel
- 83, 84: Hebelarme
- 85: Schwenkpunkt
- 86: Abstützfläche
- 87: Stellschraube
- 90: Federring
- 91: Spiralfeder
- 100: axiale Richtung, Längsrichtung
- 101: axiale Richtung, Längsrichtung von 12
- 110, 120: Kupplungsende
- 111, 121: Anschlussende
- 130, 140: Antriebseinrichtung für 13, 14
- 220, 221: Abschnittsenden

## Patentansprüche

1. Kupplungsvorrichtung (1) zum Zusammenschließen zweier Leitungen, wobei die Kupplungsvorrichtung (1)
zwei Kupplungsteile (11, 12) aufweist, welche zur Herstellung einer Verbindung zweier Leitungen (3, 4) reversibel lösbar miteinander in axialer Richtung (100) zusammengekoppelt und verbunden werden können, so dass die Leitungen (3,4) wiederholt miteinander verbunden werden können, wobei
die Verbindung der Kupplungsteile (11, 12) mit zumindest einer Dichtung (5) gegenüber der Umgebung abgedichtet ist, wobei
die beiden Kupplungsteile (11, 12) mit mehreren in Umfangsrichtung der Kupplungsvorrichtung verteilten, federbelasteten Kupplungselementen (8) zusammengehalten werden, derart, dass die beiden Kupplungsteile (11, 12) entgegen von durch die Federbelastung wirkenden Federkräften auseinander bewegt oder geknickt werden können, bis die Kupplungselemente (8) nach Überschreiten eines bestimmten Wegs entkoppeln, so dass sich die Kupplungsteile (11, 12) trennen können, wobei die beiden Kupplungsteile (11, 12) bis zur Trennung um einen Knickwinkel von mindestens 0,5 ° abknickbar sind, und wobei
zumindest eines der Kupplungsteile (11, 12) einen Auftriebskörper (16, 17) umfasst, sodass zumindest eines der Kupplungsteile (11, 12) in Wasser schwimmfähig ist.

2. Kupplungsvorrichtung gemäß dem vorstehenden Anspruch, **dadurch gekennzeichnet, dass** die Kupplungsvorrichtung in zusammengekuppeltem Zustand der beiden Kupplungsteile (11, 12) in Wasser schwimmfähig ist.

3. Kupplungsvorrichtung gemäß einem der vorstehenden Ansprüche, wobei zumindest eines der Kupplungsteile (11,12) wenigstens eine schräg bezüglich der axialen Richtung (100) der Kupplungsvorrichtung (1) verlaufende Kopplungsfläche (7) aufweist, und
wobei
die Kupplungsvorrichtung (1) in Umfangsrichtung verteilte federbelastete Kupplungselemente (8) aufweist, welche in zusammengekuppeltem Zustand der Kupplungsteile in Kontakt mit einer oder mehreren Kopplungsflächen (7) stehen und in radialer Richtung entgegen der Federbelastung bewegbar oder schwenkbar sind, und
wobei
durch die schräg liegende Kopplungsfläche (7) radial wirkende Kräfte der Federbelastung in axial wirkende Kräfte umgesetzt werden, welche die beiden Kupplungsteile (11, 12) an deren Kupplungsenden (110, 120) zusammenhalten, und wobei die Kupplungsteile durch eine quer zur axialen Richtung einwirkende Kraft gegen die radial wirkende Federbelastung abknickbar sind, indem das Kopplungselement (8) in radialer Richtung gegen die Federbelastung bewegt wird.

4. Kupplungsvorrichtung gemäß dem vorstehenden Anspruch, wobei die Kupplungselemente (8) zu der Kopplungsfläche (7) korrespondierende und zur axialen Richtung (100) schräg liegende Flächen (80) aufweisen, so dass bei einer axialen Auseinanderbewegung der Kupplungsteile (11, 12) und dadurch vermittelter radialer Bewegung eines Kupplungselements (8) die korrespondierenden Flächen des Kupplungselements und der Kopplungsfläche (7) aneinander vorbei gleiten.

5. Kupplungsvorrichtung gemäß einem der vorstehenden Ansprüche, **dadurch gekennzeichnet, dass** das Federelement (9) einen dehnbaren Federring (90) umfasst.

6. Kupplungsvorrichtung (1) gemäß einem der vorstehenden Ansprüche, **dadurch gekennzeichnet, dass** die federbelasteten Kupplungselemente (8) Hebel (82) umfassen, wobei die Hebel (82) entgegen der Federbelastung schwenkbar gelagert sind.

7. Kupplungsvorrichtung (1) gemäß dem vorstehenden Anspruch, **dadurch gekennzeichnet, dass** die Hebel (82) so gelagert sind, dass deren Schwenkbewegung um einen Schwenkpunkt (85) erfolgt, dessen Position in radialer Richtung einstellbar ist.

8. Kupplungsvorrichtung (1) gemäß einem der beiden vorstehenden Ansprüche, wobei der Hebel (82) so gelagert ist, dass dieser zwei sich in Längsposition entlang der Hebelarme (83, 84) unterscheidende Schwenkachsen aufweist, so dass eine Schwenkung durch auseinander Bewegen oder zueinander Knicken der Kupplungsteile (11, 12) um eine erste Schwenkachse und ein Öffnen der Kupplungselemente (8) zum Zusammenkoppeln der Kupplungsteile (11, 12) durch Schwenken um eine zweite Schwenkachse erfolgt.

9. Kupplungsvorrichtung gemäß einem der vorstehenden Ansprüche, **dadurch gekennzeichnet, dass** die beiden Kupplungsteile jeweils einen zum Kupplungsende (110, 120) hin geöffneten Hohlraum (19, 20) und eine Abdichtvorrichtung (13, 14) aufweisen, wobei die Abdichtvorrichtung (13, 14) so ausgebildet ist, dass diese beim Trennen der Kupplungsteile (11, 12) den Hohlraum gegenüber der Umgebung abdichtet.

10. Kupplungsvorrichtung (1) gemäß einem der vorstehenden Ansprüche, **dadurch gekennzeichnet, dass** jedes der Kupplungsteile (11, 12) für sich genommen schwimmfähig ist.

11. Kupplungsvorrichtung (1) gemäß einem der vorstehenden Ansprüche, **dadurch gekennzeichnet, dass** beide Kupplungsteile (11, 12) zumindest einen Auftriebskörper (16, 17) aufweisen.

12. Kupplungsvorrichtung (1) gemäß einem der vorstehenden Ansprüche, ausgebildet zum Verbinden zweier Fluid-, Strom- oder Signalleitungen.

13. Kupplungsvorrichtung gemäß einem der vorstehenden Ansprüche, **gekennzeichnet durch** einen fernbetätigbaren Entkopplungsmechanismus, mit welchem die Kupplungselemente (8) radial bewegbar sind, bis diese von den Kopplungsflächen (7) entkoppeln und die Kupplungsteile (11, 12) sich trennen.

14. Kupplungsvorrichtung gemäß einem der vorstehenden Ansprüche, **dadurch gekennzeichnet, dass** die Kupplungsvorrichtung aus Metall gefertigt ist.

15. Kupplungsvorrichtung gemäß einem der vorstehenden Ansprüche, **dadurch gekennzeichnet, dass** die Kupplungsvorrichtung (1) einen Durchmesser von mindestens 30 cm aufweist.

16. Kupplungsvorrichtung gemäß einem der vorstehenden Ansprüche, **dadurch gekennzeichnet, dass** die Kupplungsvorrichtung (1) als Sicherheitstrennkupplung ausgebildet ist, welche sich bei einer Überschreitung einer vorgegebenen mechanischen Zugbelastungsgrenze auftrennt, um zu vermeiden, dass die angeschlossenen Leitungen 3, 4 reißen.

17. Kupplungsvorrichtung gemäß einem der vorstehenden Ansprüche, **gekennzeichnet, durch** ein Fluidkanal (6) in den Kupplungsteilen (11, 12) mit einem Durchmesser von mindestens 203,2 mm (8 Zoll), vorzugsweise mindestens 254 mm (10 Zoll).

18. Leitungsanordnung (2), welche zwei Leitungen (3, 4) umfasst, welche durch eine Kupplungsvorrichtung (1) gemäß einem der vorstehenden Ansprüche miteinander verbunden sind, wobei die Federelemente (9) der Kupplungselemente (8) der Kupplungsvorrichtung (1) so ausgelegt sind, dass bei einer durch eine seitlich auf einen Leitungsabschnitt (22) einwirkenden Kraft, innerhalb welchem die Kupplungsvorrichtung (1) angeordnet ist, der durch die Kraft hervorgerufene Knickwinkel (α) zwischen den Kupplungsteilen (11, 12) mehr als die Hälfte des Winkels (β) zwischen den Längsrichtungen der Abschnittsenden (220, 221) des Leitungsabschnitts (22) ausmacht, wobei die Länge des Leitungsabschnitts (22) durch das zwanzigfache des Innendurchmessers des Fluidkanals (6) einer der Leitungen (3, 4) gegeben ist, oder 8 Meter beträgt.

19. Schwimmende Leitungsverbindung zwischen zwei Leitungen (3, 4), wobei die Leitungen (3, 4) der Leitungsverbindung mit einer an der Wasseroberfläche schwimmenden Kupplungsvorrichtung (1) gemäß einem der Ansprüche 1 bis 17 verbunden sind.

## Claims

1. A coupling device (1) for connecting two lines, the coupling device (1) comprising
two coupling parts (11, 12) that can be coupled together and connected to one another so as to establish a connection between two lines (3, 4) in an axial direction (100) in a reversible detachable way, so that the lines (3, 4) can be repeatedly connected to one another; wherein the connection of the coupling parts (11, 12) is sealed off from the environment by at least one seal (5); wherein
the two coupling parts (11, 12) are held together by a plurality of spring-loaded coupling members (8) that are distributed circumferentially around the coupling device, such that the two coupling parts (11, 12) can be moved apart or buckled against spring forces which are acting by virtue of the spring loading, until the coupling members (8) decouple once a certain distance has been exceeded, so that the coupling parts (11, 12) can separate;
wherein the two coupling parts (11, 12) can be buckled through a bend angle of at least 0.5° until they separate; and wherein
at least one of the coupling parts (11, 12) comprises a buoyancy body (16, 17), so that at least one of the coupling parts (11, 12) can float in water.

2. The coupling device according to the preceding claim, **characterized in that**
the coupling device can float in water when the two coupling parts (11, 12) are coupled together.

3. The coupling device according to any one of the preceding claims,
wherein at least one of the coupling parts (11, 12) has at least one coupling surface (7) that extends obliquely with respect to the axial direction (100) of the coupling device (1); and wherein
the coupling device (1) has circumferentially distributed spring-loaded coupling members (8) which, when the coupling parts are coupled together, are in contact with one or more coupling surface(s) (7) and can be moved or pivoted radially, against the spring load; and wherein,
by virtue of the oblique coupling surface (7), radially acting spring loading forces are converted into axially acting forces which hold the two coupling parts (11, 12) together at the coupling ends (110, 120) thereof; and
wherein the coupling parts can be buckled by a force acting transversely to the axial direction and against the radially acting spring load, by moving the coupling member (8) radially, against the spring load.

4. The coupling device according to the preceding claim, wherein the coupling members (8) have surfaces (80) that extend obliquely relative to the axial direction (100) and correspond to the coupling surface (7), so that when the coupling parts (11, 12) are moved apart axially and a coupling member (8) is thereby moved radially, the corresponding surfaces of the coupling member and of the coupling surface (7) slide past each other.

5. The coupling device according to any one of the preceding claims, **characterized in that** the spring element (9) comprises a stretchable spring ring (90).

6. The coupling device (1) according to any one of the preceding claims, **characterized in that** the spring-loaded coupling members (8) comprise levers (82), wherein the levers (82) are mounted so as to be pivotable against the spring load.

7. The coupling device (1) according to the preceding claim, **characterized in that**
the levers (82) are mounted so that their pivoting movement occurs about a pivot (85) that is adjustable in its position in the radial direction.

8. The coupling device (1) according to any one of the two preceding claims,
wherein the lever (82) is mounted so as to have two pivot axes that differ in the longitudinal position along the lever arms (83, 84), such that pivoting by moving apart or buckling the coupling parts (11, 12) relative to each other occurs about a first pivot axis, and opening of the coupling members (8) for coupling together the coupling parts (11, 12) occurs by pivoting about a second pivot axis.

9. The coupling device according to any one of the preceding claims, **characterized in that** the two coupling parts each have a cavity (19, 20) that opens towards the coupling end (110, 120), and include a sealing means (13, 14), wherein the sealing means (13, 14) is configured so as to seal the cavity from the environment when the coupling parts (11, 12) are separated.

10. The coupling device (1) according to any one of the preceding claims, **characterized in that** each of the coupling parts (11, 12) can float by itself.

11. The coupling device (1) according to any one of the preceding claims, **characterized in that** both coupling parts (11, 12) comprise at least one buoyancy body (16, 17).

12. The coupling device (1) according to any one of the preceding claims, designed for connecting two fluid, power or signal lines.

13. The coupling device according to any one of the preceding claims, **characterized by**
a remotely controllable decoupling mechanism which is operable to move the coupling members (8) radially until they decouple from the coupling surfaces (7) and the coupling parts (11, 12) separate.

14. The coupling device according to any one of the preceding claims, **characterized in that** the coupling device is made of metal.

15. The coupling device according to any one of the preceding claims, **characterized in that** the coupling device (1) has a diameter of at least 30 cm.

16. The coupling device according to any one of the preceding claims, **characterized in that** the coupling device (1) is in the form of a safety disconnect coupling which separates when a predetermined mechanical tensile load threshold is exceeded in order to prevent the connected lines (3, 4) from breaking.

17. The coupling device according to any one of the preceding claims, **characterized by** a fluid passage (6) inside the coupling parts (11, 12) having a diameter of at least 203.2 mm (8 inches), preferably at least 254 mm (10 inches).

18. A line assembly (2) comprising two lines (3, 4) which are connected to one another by a coupling device (1) according to any one of the preceding claims, wherein the spring elements (9) of the coupling members (8) of the coupling device (1) are designed such that when a force acts laterally on a line section (22) within which the coupling device (1) is arranged, the buckling angle (α) between the coupling parts (11, 12) caused by said force is more than half of the angle (β) between the longitudinal extension directions of the section ends (220, 221) of said line section (22);
wherein the length of the line section (22) is twenty times the inner diameter of the fluid passage (6) of any one of the lines (3, 4), or 8 meters.

19. A floating line connection between two lines (3, 4), wherein the lines (3, 4) of the line connection are connected by a coupling device (1) according to any one of claims 1 to 17, which is floating on the water surface.

## Revendications

1. Dispositif d'accouplement (1) destiné à raccorder deux lignes, dans lequel le dispositif d'accouplement (1) présente deux pièces d'accouplement (11,12) qui peuvent être accouplées et reliées l'une à l'autre de manière amovible et réversible dans la direction axiale (100) pour établir une liaison entre deux lignes (3, 4), de sorte que les lignes (3, 4) peuvent être reliées de manière répétée l'une à l'autre ; dans lequel
la liaison des pièces d'accouplement (11, 12) est rendue étanche vis-à-vis de l'environnement par au moins un joint d'étanchéité (5) ; dans lequel
les deux pièces d'accouplement (11, 12) sont maintenues ensemble par plusieurs éléments d'accouplement (8) sollicités par ressort et répartis dans le sens de la circonférence du dispositif d'accouplement, de manière à ce que les deux pièces d'accouplement (11, 12) puissent être déplacées ou fléchies pour être éloignées l'une de l'autre, à l'encontre des forces élastiques agissant du fait de la sollicitation par ressort, jusqu'à ce que les éléments d'accouplement (8) se désaccouplent, après dépassement d'une distance définie, de sorte que les pièces d'accouplement (11, 12) peuvent se séparer ;
dans lequel les deux pièces d'accouplement (11, 12) peuvent être fléchies sous un angle de fléchissement d'au moins 0,5°, jusqu'à la séparation ; et dans lequel
au moins une des pièces d'accouplement (11, 12) comprend un corps flotteur (16, 17), de sorte qu'au moins une des pièces d'accouplement (11, 12) peut flotter dans l'eau.

2. Dispositif d'accouplement selon la revendication précédente, **caractérisé en ce que**, à l'état accouplé des deux pièces d'accouplement (11, 12), le dispositif d'accouplement peut flotter dans l'eau.

3. Dispositif d'accouplement selon l'une des revendications précédentes, dans lequel au moins une des pièces d'accouplement (11, 12) présente au moins une surface d'accouplement (7) s'étendant en biais par rapport à la direction axiale (100) du dispositif d'accouplement (1), et dans lequel
le dispositif d'accouplement (1) présente des éléments d'accouplement (8) sollicités par ressort, qui sont répartis dans le sens de la circonférence et, à l'état accouplé des pièces d'accouplement, sont en contact avec une ou plusieurs surfaces d'accouplement (7) et peuvent être déplacés ou pivotés dans la direction radiale, à l'encontre de la sollicitation par ressort, et dans lequel
du fait de la surface d'accouplement (7) disposée en biais, des forces de la sollicitation par ressort qui agissent dans le sens radial sont transformées en forces qui agissent dans le sens axial et maintiennent ensemble les deux pièces d'accouplement (11, 12) au niveau de leurs extrémités d'accouplement (110, 120), et dans lequel les pièces d'accouplement peuvent être fléchies par une force agissant transversalement à la direction axiale, à l'encontre de la sollicitation par ressort exercée dans le sens radial, par le fait que l'élément d'accouplement (8) est déplacé dans la direction radiale, à l'encontre de la sollicitation par ressort.

4. Dispositif d'accouplement selon la revendication précédente, dans lequel les éléments d'accouplement (8) présentent des surfaces (80) correspondant à la surface d'accouplement (7) et disposées en biais par rapport à la direction axiale (100), de sorte que lors d'un mouvement éloignant axialement les pièces d'accouplement (11, 12) et du mouvement radial ainsi transmis d'un élément d'accouplement (8), les surfaces correspondantes de l'élément d'accouplement et de la surface d'accouplement (7) glissent les unes sur les autres.

5. Dispositif d'accouplement selon l'une des revendications précédentes, **caractérisé en ce que** l'élément à ressort (9) comprend un anneau élastique (90) extensible.

6. Dispositif d'accouplement (1) selon l'une des revendications précédentes, **caractérisé en ce que** les éléments d'accouplement (8) sollicités par ressort comportent des leviers (82), les leviers (82) étant montés avec possibilité de pivotement à l'encontre de la sollicitation par ressort.

7. Dispositif d'accouplement (1) selon la revendication précédente, **caractérisé en ce que** les leviers (82) sont montés de manière à ce que leur mouvement pivotant s'effectue autour d'un point de pivotement (85) dont la position peut être réglée dans la direction radiale.

8. Dispositif d'accouplement (1) selon l'une des deux revendications précédentes, dans lequel le levier (82) est monté de manière telle qu'il présente deux axes de pivotement se distinguant dans la position longitudinale le long des bras de levier (83, 84), de sorte qu'un pivotement par éloignement ou fléchissement des pièces d'accouplement (11, 12) l'une par rapport à l'autre s'effectue autour d'un premier axe de pivotement et une ouverture des éléments d'accouplement (8) en vue de l'accouplement des pièces d'accouplement (11, 12) s'effectue par pivotement autour d'un deuxième axe de pivotement.

9. Dispositif d'accouplement selon l'une des revendications précédentes, **caractérisé en ce que** les deux pièces d'accouplement présentent chacune une cavité (19, 20), ouverte en direction de l'extrémité d'accouplement (110, 120), ainsi qu'un dispositif d'étanchéité (13, 14), le dispositif d'étanchéité (13, 14) étant réalisé de manière à ce que, lors de la séparation des pièces d'accouplement (11, 12), il rende la cavité étanche vis-à-vis de l'environnement.

10. Dispositif d'accouplement (1) selon l'une des revendications précédentes, **caractérisé en ce que**, prises séparément, chacune des pièces d'accouplement (11, 12) peut flotter.

11. Dispositif d'accouplement (10) selon l'une des revendications précédentes, **caractérisé en ce que** les deux pièces d'accouplement (11, 12) présentent au moins un corps flotteur (16, 17).

12. Dispositif d'accouplement (1) selon l'une des revendications précédentes, conçu pour relier deux conduites de fluide ou lignes de courant ou de signaux.

13. Dispositif d'accouplement selon l'une des revendications précédentes, **caractérisé en ce qu'**il comporte un mécanisme de désaccouplement qui peut être actionné à distance et permet de déplacer radialement les éléments d'accouplement (8) jusqu'à ce que ceux-ci se désaccouplent des surfaces d'accouplement (7) et que les pièces d'accouplement (11, 12) se séparent.

14. Dispositif d'accouplement selon l'une des revendications précédentes, **caractérisé en ce que** le dispositif d'accouplement est réalisé en métal.

15. Dispositif d'accouplement selon l'une des revendications précédentes, **caractérisé en ce que** le dispositif d'accouplement (1) présente un diamètre d'au moins 30 cm.

16. Dispositif d'accouplement selon l'une des revendications précédentes, **caractérisé en ce que** le dispositif d'accouplement (1) est réalisé comme moyen d'accouplement à séparation de sécurité qui se sépare en cas de dépassement d'une limite prédéterminée de contrainte de traction mécanique, pour éviter que les lignes 3, 4 raccordées ne soient rompues.

17. Dispositif d'accouplement selon l'une des revendications précédentes, **caractérisé en ce qu'**il comporte un conduit de fluide (6) dans les pièces d'accouplement (11, 12), avec un diamètre d'au moins 203,2 mm (8 pouces), de préférence d'au moins 254 mm (10 pouces).

18. Ensemble de lignes (2) comportant deux lignes (3, 4) qui sont reliées entre elles par un dispositif d'accouplement (1) selon l'une des revendications précédentes, les éléments à ressort (9) des éléments d'accouplement (8) du dispositif d'accouplement (1) étant conçus de manière à ce que, en présence d'une force agissant latéralement sur une portion de ligne (22) dans laquelle est monté le dispositif d'accouplement (1), l'angle de fléchissement (α) entre les pièces d'accouplement (11, 12) qui est engendré par la force corresponde à plus de la moitié de l'angle (β) entre les directions longitudinales des extrémités de portion (220, 221) de la portion de ligne (22), la longueur de la portion de ligne (22) étant définie par le multiple de vingt du diamètre intérieur du conduit de fluide (6) de l'une des lignes (3, 4) ou étant de 8 mètres.

19. Raccordement de lignes flottant entre deux lignes (3, 4), dans lequel les lignes (3, 4) du raccordement de lignes sont reliées à un dispositif d'accouplement (1) selon l'une des revendications 1 à 17, qui flotte à la surface de l'eau.
